(19) Europäisches Patentamt
European Patent Office
Office européen des brevets

(11) Veröffentlichungsnummer: **0 069 975**
**B1**

# (12) EUROPÄISCHE PATENTSCHRIFT

(45) Veröffentlichungstag der Patentschrift: **17.04.85**

(51) Int. Cl.[4]: **C 08 J 9/00,** C 08 L 75/04, C 08 K 3/32, C 08 K 5/51

(21) Anmeldenummer: **82106046.4**

(22) Anmeldetag: **07.07.82**

(54) **Verfahren zur Herstellung von flammwidrigen Polyurethan- und/oder Polyisocyanuratgruppen enthaltenden Schaumstoffen.**

(30) Priorität: **15.07.81 DE 3127914**

(43) Veröffentlichungstag der Anmeldung: **19.01.83 Patentblatt 83/3**

(45) Bekanntmachung des Hinweises auf die Patenterteilung: **17.04.85 Patentblatt 85/16**

(84) Benannte Vertragsstaaten: **AT BE CH DE FR GB IT LI NL SE**

(56) Entgegenhaltungen:
**US - A - 3 631 146**

**W.C. KURYLA et al.: "Flame retardancy of polymeric materials", Band 3, 1975, Seiten 32-60, Marcel Dekker Inc., New York, USA**

(73) Patentinhaber: **BASF Aktiengesellschaft, Carl-Bosch-Strasse 38, D-6700 Ludwigshafen (DE)**

(72) Erfinder: **Muench, Volker, Dr., Luitpoldstrasse 114, D-6700 Ludwigshafen (DE)**
Erfinder: **Frank, Wolfram, Dr., Bergstrasse 162, D-6900 Heidelberg (DE)**

**EP 0 069 975 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Herstellung von Polyurethan- und Polyurethangruppen enthaltenden Polyisocyanuratschaumstoffen ist bekannt. Zur Verbesserung der Flammschutzwirkung können in diese Schaumstoffe halogenhaltige Polyole und/oder Halogen und Phosphor enthaltende Additive incorporiert werden.

Zur Verstärkung der Flammschutzwirkung kann man außerdem eine Reihe von Metalloxiden zusetzen, wie z. B. ZnO, $B_2O_3$, $Fe_2O_3$, CaO, $Sb_2O_3$. Diese Verbindungen zeigen selbst keinen Flammschutzeffekt, sie sind aber zusammen mit dem organisch gebundenen Halogen synergistisch wirksam. Als wirksamstes System in Polyurethanschaumstoffen hat sich dabei Antimon-(III)-oxid/Halogen erwiesen (s. W. C. Kuryla u. A. J. Lapa, Flame Retardancy of Polymeric Materials, Bd. 3 (Verlag Marcel Dekker, New York, 1975).

Der Nachteil dabei ist, daß das Antimon-(III)-oxid eine gewisse Versprödung der Schaumstoffe bewirkt. Ebenso sind seine toxikologischen Eigenschaften nicht unbedenklich (vermutlich cancerogen). Schließlich erweist es sich aufgrund seiner großen Härte als schwer einarbeitbar und verursacht Abrasion an den Mischaggregaten der Maschinen.

Als weitere flammhemmende Zusätze sind in der Literatur eine Reihe von phosphorhaltigen Flammschutzmitteln beschrieben z. B. Phosphate, Phosphonate, Phosphite. Diese Verbindungen, die zum Teil zusätzlich Halogen enthalten, werden entweder allein oder kombiniert mit halogenhaltigen Verbindungen eingesetzt. Einen Synergismus Phosphor/Halogen vergleichbar dem Antimon/Halogen konnte aber bisher nicht nachgewiesen werden (d. E. D. Weil in Flame Retardancy of Polymeric Material Bd. 3; Hindersinn u. Witschard in Flame Retardancy of Polymeric Materials Bd. 4 (Verlag Marcel Dekker, New York, 1978)).

Aufgabe der vorliegenden Erfindung war es einen Ersatz für Antimon-(III)-oxid zu finden, der einen gleichwertigen Synergismus mit Halogen aufweist, ohne dessen Nachteile zu besitzen.

Diese Aufgabe konnte überraschenderweise gelöst werden durch die Verwendung von salzartigen anorganischen und/oder organischen Hypophosphiten in Kombination mit den genannten organischen Halogen oder Halogen und Phosphor enthaltenden Verbindungen. Die Hypophosphite haben selbst keine flammhemmende Wirkung.

Gegenstand der vorliegenden Erfindung ist somit ein Verfahren zur Herstellung von urethan- und/oder isocyanuratgruppenhaltigen, flammwidrigen Schaumstoffen durch Umsetzung von organischen Polyisocyanaten mit Polyolen in Gegenwart von Flammschutzmitteln, Katalysatoren und Treibmitteln sowie gegebenenfalls Kettenverlängerungsmitteln, Vernetzern, Hilfsmitteln und Zusatzstoffen, das dadurch gekennzeichnet ist, daß man als Flammschutzmittel synergistisch wirkende Systeme aus

a) organischen Halogen oder Halogen und Phosphor enthaltenden Verbindungen und
b) anorganischen und/oder organischen Hypophosphiten verwendet.

Setzt man die Hypophosphite in urethan- und/oder isocyanuratgruppenhaltigen Schaumstoffen zusammen mit reaktiven oder additiven organischen, halogenhaltigen oder halogen- und phosphorhaltigen Flammschutzmitteln ein, so zeigen diese Verbindungen eine dem Antimon-(III)-oxid vergleichbare synergistische Wirkung.

Vorteilhaft ist ferner die leichte Herstellbarkeit der Hypophosphite sowie, soweit bekannt, deren relative Ungiftigkeit.

Die so hergestellten Schaumstoffe weisen eine wesentlich geringere Sprödigkeit auf als entsprechende Antimon-(III)-oxid haltige Schaumstoffe. Sie zeigen gute mechanische Eigenschaften und eine erhöhte Flammbeständigkeit.

Verglichen mit herkömmlichen phosphor/halogenhaltigen Flammschutzsystemen bringt die erfindungsgemäße Verwendung des Systems Hypophosphit/Halogen eine erhebliche Einsparung an Halogenverbindungen. Diese Einsparung an Flammschutzmitteln wirkt sich auf die mechanischen Eigenschaften der Schäume positiv aus. Bei den bisher im Polyurethan als Flammschutzmittel eingesetzten additiven Phosphorverbindungen ist bekannt, daß sie in größerer Menge eine gewisse Weichmacherwirkung haben. Dies ist bei den Hypophosphiten nicht der Fall, da nur geringe Mengen notwendig sind, um die Wirkung des Halogens zu verstärken.

Für das erfindungsgemäße Verfahren verwendbar sind organische, organisch salzartige und vorzugsweise anorganisch salzartige Hypophosphite.

Als organische Hypophosphite kommen z. B. in Betracht: Hypophosphite von ein- und mehrwertigen Alkoholen, wie z. B. solche der Formel $R-O-PH_2O$, in der R einen linearen oder verzweigten Alkylrest mit 1 bis 20, vorzugsweise 4 bis 14 C-Atomen, einen Arylrest oder einen Sauerstoff, Stickstoff oder Schwefel enthaltenden heterocyclischen Rest, bedeutet. Im einzelnen seien beispielhaft genannt n-Butyl, n-Hexyl-, n-Octyl- und 2-Ethyl-octylhypophosphit, 1,6-Hexandiol-, 1.10-Decandiolhypophosphit und 1.10-Decandiol-dihypophosphit. Weiterhin kommen in Betracht Hypophosphite von Cellulose- und Vinylalkohol-Polymerisaten. Besonders bewährt haben sich auch organisch salzartige Hypophosphite, wie z. B. die Salze von 1 Mol Melamin mit 1 bis 3, vorzugsweise einem Mol unterphosphoriger Säure. Vorzugsweise Anwendung finden anorganische salzartige Hypophosphite, z. B. Hypophosphite der Formel

$Me^n(H_2PO_2)_n$,

in der Me ein Metallkation der Wertigkeit n von Elementen der I., II. und III. Hauptgruppe, der I. bis VII. Nebengruppe des Periodensystems und der Lanthaniden bedeutet, wobei das Periodensystem definiert wird gemäß Handbook of Chemistry and Physics 14th Edition, publiziert von Chemical Rubber Publishing Co, 2310 Superior Ave. N. E. Cleveland, Ohio,
Doppelhypophosphite der Formel

$CeX(H_2PO_2)_6$,

in der X gleich Er, Tm, Yb und Lu ist und
komplexe Hypophosphite der Formeln

$Y[Zr(H_2PO_2)_6]$ und $Y[Hf(H_2PO_2)_6]$,

in der Y bedeutet: Mg, Ca, Mn, Co, Ni, Fe, Zn und Cd.

Besonders bewährt haben sich und daher vorzugsweise verwendet werden $NaH_2PO_2$, $Mg(H_2PO_2)_2$, $Ca(H_2PO_2)_2$, $Sn(H_2PO_2)_2$ und in insbesondere $Al(H_2PO_2)_3$.

Soweit die genannten Hypophosphite keine Handelsprodukte sind, können sie nach bekannten Verfahren hergestellt werden.

Wie bereits dargelegt wurde, bewirken die erfindungsgemäß verwendbaren Hypophosphite jedoch nur in Kombination mit Halogen oder Halogen und Phosphor enthaltenden Verbindungen, beispielsweise üblichen Flammschutzmittel der genannten Art, eine Verbesserung der Flammwidrigkeit. Vorzugsweise verwendet werden solche Halogen oder Halogen und Phosphor enthaltende Verbindungen, die zusätzlich noch Substituenten mit reaktiven Wasserstoffatomen, wie z. B. Amino-, Carboxyl- und/oder Hydroxylgruppen oder Epoxidreste gebunden enthalten. Im einzelnen seien beispielhaft genannt:

a) Nicht reaktive halogenhaltige oder halogen- und phosphorhaltige Verbindungen wie z. B. Perchlordiphenyl, Perchlortriphenyl usw. Hexabrombenzol, Octabromdiphenyl, Dekabromdiphenyl, Pentabromdiphenyl, Dekabromdiphenyl-, Pentabromdiphenylether, Halogenparaffine, Hexachlorcyclopentadien, Pentabromchlorcyclohexan, Hexabromcyclododecan, Tris-(2,3-dichlor)propylphosphat, Tetrakis(2-chlorethyl)ethylendiphosphat, Tris-2-chlorethylphosphat.
b) Mit NCO-Gruppen reaktive halogenhaltige Verbindungen, wie z. B. Mono-, Di- oder Tribromphenol, Tetrachlor-, Tetrabromphthalsäure, Tetrachlor-, Tetrabromphthalsäuremonoester oder -diester mit Diolen und/oder Triolen, Tetrabrom-bis-phenolidi-$\beta$-hydroxy-ethylamino-octachlorbiphenyl, Dibrombutendiol, 2,3-Dibrombernsteinsäure, 2,3-Dibrompropionsäure oder deren Monoester mit Diolen und/oder Triolen. Epichlorhydrin, Epibromhydrin, Hexachlor-endomethylen-cyclohexandicarbonsäure, deren Monoester oder Diester mit Diolen und/oder Triolen, -cyclohexandiol, Pentabromphenol, Tetrabrombrenzcatechin, Tetrabromhydrochinon, Trichlorbutylenoxid-Polymer und Butindiol-Epichlorhydrin-Umsetzungsprodukte. Die beispielhaft genannten Verbindungen können gegebenenfalls durch Addition von Alkylenoxiden, wie z. B. Ethylen- und/oder Propylenoxid, modifiziert werden. In Betracht kommen insbesondere halogenhaltige Polyetherpolyole, wie sie in der DE-AS 2 445 571 (US-PS 4 020 024 und 4 067 911) beschrieben werden und
c) mit NCO-Gruppen reaktive halogen- und phosphorhaltige Verbindungen, wie z. B. Halogen-Phosphor-Polyole der Formel

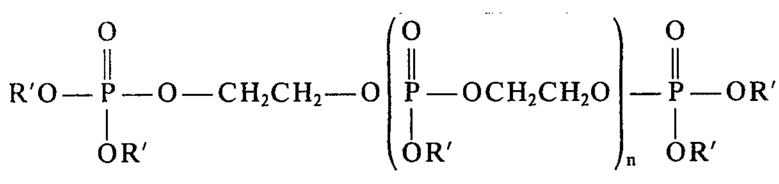

in der n eine Zahl von 0 bis 6 und R' gleich H oder $-CH_2CH_2-Cl$ sind, wobei mindestens einer der Reste R' Wasserstoff und ein anderer Rest R' $-CH_2CH_2-Cl$ sein muß. Die genannten Phosphor-Halogen-Polyole können ebenfalls gegebenenfalls durch Addition von Alkylenoxiden, beispielsweise Ethylen- und/oder Propylenoxid, modifiziert werden. Verwendbar sind ferner mit Halogenen modifizierte Phosphonate, Phosphoniumsalze und Phosphonate mit Stickstoffsynergismus.

Im allgemeinen hat es sich als vorteilhaft erwiesen, 5 bis 50 Gew.-Teile, vorzugsweise 5 bis 25 Gew.-Teile der Halogen- oder Halogen und Phosphor enthaltenden Verbindungen für jeweils 100 Gew.-Teile an organischem Polyisocyanat zu verwenden. Die erforderliche Menge an Hypophosphit ist abhängig von der Wirksamkeit der Halogen oder Halogen und Phosphor enthaltenden Verbindung. Zweckmäßigerweise verwendet man ungefähr 0,1 bis 5 Gew.-%, vorzugsweise 1 bis 2,5 Gew.-% Hypophosphit, bezogen auf das Gesamtgewicht von Polyisocyanat und Polyolen.

Zu den für das erfindungsgemäße Verfahren verwendbaren Ausgangskomponenten ist folgendes

auszuführen:

Als Polyisocyanate kommen aliphatische, cycloaliphatische, araliphatische und vorzugsweise aromatische mehrwertige Isocyanate in Frage. Im einzelnen seien beispielhaft genannt: Alkylendiisocyanate mit 4 bis 12 Kohlenstoffatomen im Alkylenrest, wie 1,12-Dodecamethylen-diisocyanat, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat) 2,4- und 2,6-Hexahydrotoluylen-diisocyanat sowie entsprechende Isomerengemische, 4,4'-, 2,2'- und 2,4'-Dicyclohexylmethan-diisocyanat sowie die entsprechenden Isomerengemische und vorzugsweise aromatische Di- und Polyisocyanate wie 4,4'-, 2,4'- und 2,2'-Diisocyanato-diphenylmethan und die entsprechenden Isomerengemische, 2,4- und 2,6-Diisocyanato-toluol und die entsprechenden Isomerengemische, 1,5-Diisocyanato-naphthalin, Polyphenyl-polymethylen-polyisocyanate, 2,4,6-Triisocyanato-toluol und vorzugsweise Gemische aus Diphenylmethan-diisocyanaten und Polyphenyl-polymethylen-polyisocyanaten. Die genannten Di- und Polyisocyanate können einzeln oder in Form von Mischungen eingesetzt werden.

Häufig werden auch sogenannte modifizierte mehrwertige Isocyanate, d. h. Produkte, die durch chemische Umsetzung obiger Di- und/oder Polyisocyanate erhalten werden, verwendet. Als modifizierte organische Di- und Polyisocyanate kommen beispielsweise in Betracht: Carbodiimidgruppen aufweisende Polyisocyanate gemäß DE-PS 1 092 007, Allophanatgruppen aufweisende Polyisocyanate, wie sie z. B. in der GB-PS 994 890, den ausgelegten Unterlagen des belgischen Patents 761 626 und der NL-OS 7 102 524 beschrieben werden, Isocyanuratgruppen aufweisende Polyisocyanate wie sie z. B. in den DE-PS 1 022 789, 1 222 067 und 1 027 394 sowie den DE-OS 1 929 034 und 2 004 048 beschrieben werden, Urethangruppen aufweisende Polyisocyanate, wie sie z. B. in den ausgelegten Unterlagen des belgischen Patents 752 261 oder der US-PS 3 394 164 beschrieben werden, acylierte Harnstoffgruppen aufweisende Polyisocyanate z. B. gemäß DE-PS 1 230 778, Biuretgruppen aufweisende Polyisocyanate z. B. gemäß DE-PS 1 101 394 und GB-PS 889 050; durch Telomerisationsreaktionen hergestellte Polyisocyanate z. B. entsprechend den ausgelegten Unterlagen des belgischen Patents 723 640, Estergruppen aufweisende Polyisocyanate, wie sie z. B. in der GB-PS 965 474 und 1 072 956, der US-PS 3 567 765 und der DE-PS 1 231 688 genannt werden.

Vorzugsweise kommen jedoch zur Anwendung: urethangruppenhaltige Polyisocyanate, beispielsweise mit niedermolekularen Diolen, Triolen oder Polypropylenglykolen, modifiziertes 4,4'-Diphenylmethan-diisocyanat oder Toluylen-diisocyanat, Carbodiimidgruppen und/oder Isocyanuratringe enthaltende Polyisocyanate, z. B. auf Diphenylmethan-diisocyanat und/oder Toluylendiisocyanat-Basis und insbesondere Toluylendiisocyanate, Diphenylmethan-diisocyanate, Mischungen aus Diphenylmethan-diisocyanaten und Polyphenyl-polymethylen-polyisocyanaten (Roh-MDI) und Gemische aus Toluylendiisocyanaten und Roh-MDI.

Als Polyole kommen beispielsweise in Betracht:

Polyester-polyole mit Funktionalitäten von 2 bis 6, vorzugsweise 2 bis 4 und Hydroxylzahlen von 200 bis 700, vorzugsweise von 280 bis 490 auf Basis von organischen Dicarbonsäuren, vorzugsweise aliphatischen Dicarbonsäuren mit 2 bis 12, vorzugsweise 4 bis 8 Kohlenstoffatomen im Alkylenrest und mehrwertigen Alkoholen, vorzugsweise Diolen. Genannt seien beispielhaft aliphatische Dicarbonsäuren, wie Bernsteinsäure, Glutarsäure, Pimelinsäure, Undecandisäure, Dodecandisäure und vorzugsweise Adipinsäure und aromatische Dicarbonsäuren, wie Phthalsäure und Terephthalsäure. Beispiele für zwei- und mehrwertige, insbesondere zweiwertige Alkohole sind: 1,2- bzw. 1,3-Propylenglykol, Dipropylenglykol, 1,5-Pentamethylenglykol, 1,8-Octamethylenglykol, Decamethylenglykol-1,10, Glycerin, Trimethylolpropan, Pentaerythrit sowie Zuckeralkohole, z. B. Sorbit und vorzugsweise Ethylenglykol, Diethylenglykol, 1,4-Butylenglykol und 1,6-Hexamethylenglykol. Als mehrwertige Alkohole können ferner Alkanolamine, Dialkanolamine und Trialkanolamine, z. B. Ethanolamin, Diethanolamin, Triethanolamin und Triisopropanolamin verwendet werden. Die genannten Dicarbonsäuren und mehrwertigen Alkohole können auch in Form von Mischungen eingesetzt werden. Besonders bewährt haben sich und daher vorzugsweise verwendet werden Polyester-polyole aus Adipinsäure oder Mischungen aus Bernstein-, Glutar- und Adipinsäure und Diethylenglykol und Alkoholmischungen aus Ethylenglykol/1,4-Butylenglykol, Ethylenglykol/Diethylenglykol, Ethylenglykol/Trimethylolpropan, Diethylenglykol/Trimethylolpropan, Ethylenglykol/Pentaerythrit, Ethylenglykol/Triisopropanolamin und Diethylenglykol/Triisopropanolamin.

Anstelle der genannten Polyester-polyole, die einzeln oder als Gemische eingesetzt werden können, können auch homogene, bei 10 bis 30°C flüssige Mischungen aus den oben genannten Polyester-polyolen und löslichen harten organischen Komponenten, z. B. hydroxylgruppenhaltigen Polyestern aus aromatischen Dicarbonsäuren und vorzugsweise unsubstituierten, linearen Diolen, Anwendung finden.

Vorzugsweise als Polyole verwendet man jedoch Polyether-polyole mit Funktionalitäten von 2 bis 8, vorzugsweise 2 bis 4 und Hydroxylzahlen von 150 bis 800, vorzugsweise von 200 bis 600, die nach bekannten Verfahren, beispielsweise durch anionische Polymerisation mit Alkalihydroxiden, wie Natrium- oder Kaliumhydroxid oder Alkalialkoholaten, wie Natrium- oder Kaliummethylat, -ethylat oder Kaliumisopropylat als Katalysatoren oder durch kationische Polymerisation mit Lewissäuren, wie

Antimonpentachlorid, Borfluorid-Etherat u. a. als Katalysatoren aus einem oder mehreren Alkylenoxiden mit 2 bis 4 Kohlenstoffatomen im Alkylenrest und einem Startermolekül, das 2 bis 8, vorzugsweise 2 bis 4 aktive Wasserstoffatome enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan. Als Polyether-polyole, hergestellt aus Verbindungen der erwähnten Gruppe sind besonders interessant N,N,N',N'-Tetrakis-(2-hydroxyethyl)-ethylendiamin, N,N,N',N'-Tetrakis-(2-hydroxypropyl)-ethylendiamin, N,N,N',N",N"-Pentakis-(2-hydroxypropyl)-diethylentriamin, Phenyldiisopropanolamin und höhere Alkylenoxidaddukte von Anilin.

Als Startermoleküle kommen ferner in Betracht Alkanolamine, wie Ethanolamin, Diethanolamin, N-Methyl- und N-Ethylethanolamin, N-Methyl- und N-Ethyl-diethanolamin und Triethanolamin, Ammoniak, Hydrazin und Hydrazide. Vorzugsweise verwendet werden mehrwertige, insbesondere zwei- und/oder dreiwertige Alkohole, wie Ethylenglykol, Propylenglykol-1,2 und -1,3, Diethylenglykol, Dipropylenglykol, Butylenglykol-1,4, Hexamethylenglykol-1,6, Glycerin, Trimethylol-propan, Pentaerythrit, Sorbit und Saccharose.

Die Polyether-polyole können ebenso wie die Polyester-polyole einzeln oder in Form von Mischungen verwendet werden.

Als Polyole kommen ferner Kristallitsuspensionen in Betracht, wie sie in der EP-OS 32 980 beschrieben sind. Sie können entweder einzeln oder in Form von Mischungen eingesetzt werden.

Zu Treibmitteln, welche im erfindungsgemäßen Verfahren zur Herstellung der Schaumstoffe verwendet werden können, gehört Wasser, das mit Isocyanatgruppen unter Bildung von Kohlendioxid reagiert. Die Wassermenge, die zweckmäßigerweise verwendet werden, betragen 0,1 bis 3 Gew.-%, bezogen auf das Gewicht an Polyisocyanat, bzw. 0,1 bis 2 Gew.-%, bezogen auf das Gesamtgewicht von Polyisocyanat und Polyol. Gegebenenfalls können auch größere Wassermengen verwendet werden.

Andere verwendbare Treibmittel sind niedrigsiedende Flüssigkeiten, die unter dem Einfluß der exothermen Polymerisation- bzw. Polyadditionsreaktion verdampfen. Geeignet sind Flüssigkeiten, welche gegenüber dem organischen Polyisocyanat inert sind und Siedepunkt unter 50°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung der Schaumstoffe hängt ab von der Schaumdichte, die man erreichen will, sowie gegebenenfalls von der Mitverwendung von Wasser. Im allgemeinen liefern Mengen von 5 bis 40 Gew.-%, bezogen auf organische Polyisocyanat, bzw. 2 bis 30 Gew.-%, bezogen auf das Gesamtgewicht von Polyisocyanat und Polyol zufriedenstellende Ergebnisse.

Geeignete Katalysatoren zur Beschleunigung der Reaktion zwischen den Polyolen, gegebenenfalls Wasser und den Polyisocyanaten sind beispielsweise tertiäre Amine, wie Dimethylbenzylamin, N,N,N',N'-Tetramethyldiamino-ethylether, Bis-(dimethylaminopropyl)-harnstoff, N-Methyl- bzw. N-Ethylmorpholin, Dimethylpiperazin, 1,2-Dimethylimidazol, 1-Aza-bicyclo-(3,3,0)-octan und vorzugsweise Triethylendiamin, Metallsalze, wie Zinndioctoat, Bleioctoat, Zinn-diethylhexoat und vorzugsweise Zinn-(II)-salze und Dibutylzinndilaurat sowie insbesondere Mischungen aus tert. Aminen und organischen Zinnsalzen. Vorzugsweise verwendet werden 0,1 bis 5,0 Gew.-% Katalysator auf Basis tertiärer Amine und/oder 0,01 bis 1,0 Gew.-% Metallsalze, bezogen auf das Gewicht der Polyole.

Zur Herstellung von isocyanuratgruppenhaltigen Schaumstoffen haben sich die üblichen Cyclisierungs- und Polymerisationskatalysatoren für Polyisocyanate bewährt. Als Beispiele seien genannt: starke Basen, wie quarternäre Ammoniumhydroxide, beispielsweise Benzyltrimethylammoniumhydroxid; Alkalimetallhydroxide, beispielsweise Natrium- oder Kaliumhydroxid; Alkalimetallalkoxide, beispielsweise Natriummethylat und Kaliumisopropylat; Trialkylphosphine, beispielsweise Triethylphosphin; Alkylaminoalkylphenole, beispielsweise 2,4,6-Tris-(dimethylaminomethyl)-phenol; 3- und/oder 4-substituierte Pyridine, beispielsweise 3- oder 4-Methylpyridin; metall-organische Salze, beispielsweise Tetrakis-(hydroxyethyl)-natriumborat; Friedel-Crafts-Katalysatoren, beispielsweise Aluminiumchlorid, Eisen-(III)-chlorid, Borfluorid und Zinkchlorid und Alkalimetallsalze von schwachen organischen Säuren und Nitrophenolaten, beispielsweise Kaliumoctoat, Kalium-2-ethyl-hexoat, Kaliumbenzoat, Natriumpikrat und Phthalimid-kalium. Vorzugsweise verwendet werden die stark basischen N,N',N"-Tris-(dialkylaminoalkyl)-s-hexahydrotriazine, beispielsweise das N,N',N"-Tris-(dimethylaminopropyl)-s-hexahydrotriazin, gegebenenfalls in Kombination mit aliphatischen niedermolekularen Mono- und/oder Dicarbonsäuren, beispielsweise Essigsäure und/oder Adipinsäure oder aromatischen Carbonsäuren, wie Benzoesäure.

Die geeignete Menge an Isocyanuratgruppen bildenden Katalysatoren ist abhängig von der Wirksamkeit des in Frage kommenden Katalysators. Im allgemeinen hat es sich als zweckmäßig erwiesen, 1 bis 15 Gewichtsteile, vorzugsweise 3,5 bis 10 Gewichtsteile Katalysator für jeweils 100 Gewichtsteile an organischem Polyisocyanat zu verwenden.

Zur Herstellung von Urethan- und Isocyanuratgruppen enthaltenden Schaumstoffen können die die Urethan- und Isocyanuratgruppenbildung fördernde Katalysatoren auch gemischt werden.

Nach dem erfindungsgemäßen Verfahren werden die Hartschaumstoffe, vorzugsweise ohne zusätzliche Mitverwendung von üblichen Kettenverlängerungsmitteln oder Vernetzern hergestellt. Dennoch hat es sich in manchen Fällen, beispielsweise aus verarbeitungstechnischen Gründen, als zweckmäßig erwiesen, Kettenverlängerungsmittel oder Vernetzer einzusetzen. Geeignete Kettenverlängerungsmittel oder Vernetzer besitzen Molekulargewichte von 30 bis 600, vorzugsweise 60 bis 300 und weisen vorzugsweise zwei aktive Wasserstoffatome auf. In Betracht kommen beispielsweise aliphatische und/oder aromatische Diole mit 2 bis 14, vorzugsweise 2 bis 6 Kohlenstoffatomen, wie Propandiol, Pentandiol, Hexandiol-1,6 und vorzugsweise Ethandiol, Butandiol-1,4 und Bis-(2-hydroxyethyl)-hydrochinon, Diamine, wie Ethylendiamin und gegebenenfalls 3,3'- bzw. 3,3',5,5'-di- bzw. tetrasubstituierte 4,4'-Diaminodiphenylmethane, Ethanolamine, wie Triethanolamin und Polyhydroxylverbindungen, wie Glycerin, Trimethylolpropan und niedermolekulare hydroxylgruppenhaltige Polyalkylenoxide aus den vorgenannten Ausgangsstoffen.

Der Reaktionsmischung können auch noch Hilfsmittel und Zusatzstoffe einverleibt werden. Genannt seien beispielsweise Stabilisatoren, Hydrolyseschutzmittel, Porenregler, fungistatisch und bakteriostatisch wirkende Substanzen, Farbstoffe, Pigmente, Füllstoffe, oberflächenaktive Stoffe und Weichmacher.

Als organische Füllstoffe seien beispielhaft genannt:

Sprödharze, wie sie bekannt sind als Bindemittel für die Druckindustrie, z. B. solche auf Basis Phenol, Kolophonium oder Melamin und Formaldehyd, Polyester mit Schmelzpunkten größer 190°C, vorzugsweise vernetzte Polyester auf Basis von di- oder höherfunktionellen Carbonsäuren mit Di- oder mit Monomeren wie (Meth)- acrylsäurederivaten, Homo- und Copolymerisate des Cyclopentadiens, Ketonharze, z. B. auf Basis von Cyclohexanon und spröde Polyurethanmaterialien, mit Schmelzpunkten größer als 190°C, beispielsweise vernetzte Polyurethane und Isocyanuratgruppen enthaltende Polyurethane, Polyvinylchlorid, Polyamid-6 und -6,6, Acrylatpfropfkautschuke, Butadienpfropfkautschuke sowie Polyvinylacetat.

Besonders bewährt haben sich und daher vorzugsweise verwendet werden jedoch anorganische Füllstoffe, wie die an sich bekannten üblichen Füllstoffe, Verstärkungsmittel, Beschwerungsmittel, Mittel zur Verbesserung des Abriebverhaltens in Anstrichfarben, Beschichtungsmittel usw. Verwendet werden können jedoch auch anorganische Pigmente. Im einzelnen seien beispielhaft genannt: silikatische Mineralien, beispielsweise Schichtsilikate, wie Antigorit, Serpentin, Hornblenden, Amphibole, Chrisotil, Talkum, Metalloxide, wie Kaolin, Aluminiumoxidhydrat, Titanoxide, Eisenoxide, Metallsalze, wie Kreide, Schwerspat, Bariumsulfat, anorganische Pigmente, wie Cadmiumsulfid, Zinksulfid sowie Glas.

Als Hilfsmittel genannt seien ferner beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxethylierte Alkylphenole, oxethylierte Fettalkohole, Paraffinöle, Rizinusöl- bzw. Rizinolsäureester und Türkischrotöl, die in Mengen von 0,1 bis 5 Gewichtsteilen pro 100 Gewichtsteile der Mischung aus Polyisocyanat und Polyolen angewandt werden.

Nähere Angaben über die obengenannten anderen üblichen Zusatzstoffe sind der Fachliteratur, beispielsweise der Monographie von J. H. Saunders und K. C. Frisch »High Polymers« Band XIV, Polyurethanes, Teil 1 und 2, Verlag Interscience Publishers 1962 bzw. 1964, zu entnehmen.

Zur Herstellung von urethangruppenhaltigen Schaumstoffen werden die organischen Polyisocyanate mit dem Polyolen, vorzugsweise Polyester- und/oder Polyetherpolyolen in solchen Mengen zur Umsetzung gebracht, daß das Verhältnis von reaktiven Wasserstoffatomen zu NCO-Gruppen 1 : 0,8 bis 2,5 vorzugsweise 1 : 0,9 bis 1,2 und insbesondere ungefähr 1 : 1 beträgt.

Zur Herstellung von Urethan- und Isocyanuratgruppen enthaltenden Schaumstoffen haben sich Mengenverhältnisse von NCO-Gruppen der Polyisocyanate zu reaktiven Wasserstoffatomen der Polyole von 6 bis 60 : 1, vorzugsweise von 2 bis 10 : 1 bewährt.

Die urethan- und/oder isocyanuratgruppenhaltigen Schaumstoffe werden vorzugsweise nach dem one shot Verfahren hergestellt. Hierzu mischt man die Polyisocyanate mit den Polyolen, den Katalysatoren, Treibmittel und gegebenenfalls Hilfs- und Zusatzstoffen intensiv in den genannten Mengenverhältnissen bei Temperaturen von 0 bis 50°C, vorzugsweise 15 bis 40°C und läßt danach die Reaktionsmischung in offenen oder geschlossenen Formen aufschäumen.

Das System Hypophosphit/Halogen erlaubt es urethan- und/oder isocyanatgruppenhaltige

Schaumstoffe herzustellen, die eine erhöhte Flammbeständigkeit aufweisen, von geringer Sprödigkeit sind und gute mechanische Eigenschaften besitzen.

## Beispiele

### Allgemeine Herstellungsvorschrift

### A-Komponente

Mischung aus
- Polyol
- Flammschutzmittel
- Hypophosphit
- Trichlorfluormethan
- Schaumstabilisator und
- Katalysator

### B-Komponente

Mischung aus
- Diphenylmethan-diisocyanaten und
- Polyphenyl-polymethylen-polyisocyanaten
- (Roh-MDI; NCO-Gehalt: 31 Gew.-%)

Die Komponente A und die Komponente B werden bei 23°C intensiv gemischt und in einem Karton (Größe 22 x 22 x 20 cm) aufschäumen lassen.

Die Art und Mengen der verwendeten Ausgangskomponenten sowie das Raumgewicht und Brandverhalten der erhaltenen Schaumstoffe sind in den folgenden Tabellen zusammengefaßt.

Für die in den Tabellen genannten Ausgangskomponenten wurden folgende Abkürzungen gewählt:

Roh-MDI:
Mischung aus Diphenylmethan-diisocyanaten und Polyphenyl-polymethylen-polyisocyanaten. NCO-Gehalt 31%

Kristallitsusp.:
Kristallitsuspension mit einer OH-Zahl 265, bestehend aus 48 Teilen eines Sucrosepolyols, 28 Teilen Diethylenglykoladiphat und 24 Teilen Neopentylglykolisophthalat.

®Thermolin RF 230:
Halogenhaltige Flammschutzmittel auf Basis eines Trichlorbutylenoxid-Polymeren. Handelsprodukt der Firma Olin

G 70—600:
Polyol wird als Zusatz zu Thermolin RF 230 empfohlen, Handelsprodukt der Firma Olin

®Ixol B 251:
Halogen und Phosphor enthaltendes Flammschutzpolyol. Handelsprodukt der Firma Solvay

®Bromkal 70:
Gemisch bromierter Diphenylether, Handelsprodukt der Chemische Fabrik Kalk

DC 193:
Schaumstabilisator auf Silikonbasis. Handelsprodukt der Firma Dow Corning

PCF:
Trichlorpropylphosphat

TEA:
Triethylamin

Kat:
Kaliumformiat; 35%ige Lösung in Ethylenglykol

R 11:
Trichlorfluormethan

Hal/P:
Halogenphosphorgehalt in Gew.-% bezogen auf die Gesamtmenge Polyisocyanat und Polyol

®Dabco TMR 2:
Katalysator auf Basis Trimethyl-2-hydroxypropylammoniumformiat, Handelsprodukt der Firma Air Products

Polyol A:
auf Basis Saccharose/Propylenoxid OH-Zahl: 400

Polyol B:
Polypropylenglykol mit der OH-Zahl 250.

Tabelle 1

Polyurethan-Polyisocyanurat-Schaumstoffe, hergestellt unter Mitverwendung eines Gemisches bromierter Diphenylether (Bromkal 70)

| Ausgangskomponenten | Beispiele 1 | 2 | 3 | Vergleichs-beispiel A |
|---|---|---|---|---|
| Roh-MDI [Gew.-Teile] | 214,4 | 214,4 | 214,4 | 214,4 |
| Polyol A [Gew.-Teile] | 100 | 100 | 100 | 100 |
| Polyol B [Gew.-Teile] | 10 | 10 | 10 | 10 |
| DC 193 [Gew.-Teile] | 1 | 1 | 1 | 1 |
| TEA [Gew.-Teile] | 0,4 | 0,4 | 0,4 | 0,4 |
| Kat [Gew.-Teile] | 1,6 | 1,6 | 1,6 | 1,6 |
| R 11 [Gew.-Teile] | 52 | 52 | 52 | 52 |
| Bromkal 70 [Gew.-Teile] | 40 | 40 | 40 | 40 |
| Melaminhypophosphit [Gew.-Teile] | 7 | — | — | — |
| $Al(H_2PO_2)_3$ [Gew.-Teile] | — | 7 | — | — |
| $Ca(H_2PO_2)_2$ [Gew.-Teile] | — | — | 7 | — |
| $Sb_2O_3$ [Gew.-Teile] | — | — | — | 7 |
| Hal/P [Gew.-%] | 6,4/0,26 | 6,4/0,69 | 6,4/0,6 | 6,4/— |
| B 2 nach DIN 4102 | + | + | + | + |
| Druckfestigkeit nach DIN 43 421 [$N/mm^2$] | 0,22 | 0,21 | 0,23 | 0,17 |
| Raumgewicht [g/l] | 36,7 | 35 | 35,4 | 35 |

Tabelle 2

Polyurethan-Polyisocyanurat-Schaumstoffe, hergestellt unter Mitverwendung von Flammschutzpolyolen mit Zerewitinoff aktiven Wasserstoffatomen

| Ausgangskomponenten | Beispiele 4 | 5 | 6 | 7 | 8 | 9 |
|---|---|---|---|---|---|---|
| Roh-MDI [Gew.-Teile] | 164,8 | 164,8 | 164,8 | 165,2 | 165,2 | 165,2 |
| Kristallitsusp. [Gew.-Teile] | 85 | 85 | 85 | 85 | 85 | 85 |
| DC 193 [Gew.-Teile] | 0,56 | 0,56 | 0,56 | 0,56 | 0,56 | 0,56 |
| TEA [Gew.-Teile] | 0,05 | 0,05 | 0,05 | 0,05 | 0,05 | 0,05 |
| Kat [Gew.-Teile] | 1,7 | 1,7 | 1,7 | 1,7 | 1,7 | 1,7 |
| R 11 [Gew.-Teile] | 32 | 32 | 32 | 32 | 32 | 32 |
| ®Thermolin RF 230 [Gew.-Teile] | 15 | 15 | 15 | — | — | — |
| ®Ixol B 251 [Gew.-Teile] | — | — | — | 15 | 15 | 15 |
| $Zn(H_2PO_2)_2$ [Gew.-Teile] | 10 | — | — | 5 | — | — |
| $Al(H_2PO_2)_3$ [Gew.-Teile] | — | 5 | — | — | 5 | — |
| $Ca[Zr(H_2PO_2)_6]$ [Gew.-Teile] | — | — | 10 | — | — | 5 |
| Hal/P [Gew.-%] | 2,11/1,0 | 2,15/0,7 | 2,11/1,0 | 1,9/0,57 | 1,8/0,7 | 1,9/0,57 |
| B 2 nach DIN 4102 | + | + | + | + | + | + |
| Druckfestigkeit nach DIN 43421 [$N/mm^2$] | 0,26 | 0,24 | 0,2 | 0,25 | 0,23 | 0,25 |
| Raumgewicht [g/l] | 39 | 39 | 39 | 39 | 39 | 38 |

Tabelle 2 (Fortsetzung)

| Ausgangskomponenten | Vergleichsbeispiele B | C | D | E | F | G |
|---|---|---|---|---|---|---|
| Roh-MDI [Gew.-Teile] | 164,8 | 165,2 | 165,3 | 165,8 | 167,5 | 168,5 |
| Kristallitsusp. [Gew.-Teile] | 85 | 85 | 80 | 80 | 60 | 60 |
| DC 193 [Gew.-Teile] | 0,56 | 0,56 | 0,56 | 0,56 | 0,56 | 0,56 |
| TEA [Gew.-Teile] | 0,05 | 0,05 | 0,05 | 0,05 | 0,05 | 0,05 |
| Kat [Gew.-Teile] | 1,7 | 1,7 | 1,7 | 1,7 | 1,7 | 1,7 |
| R 11 [Gew.-Teile] | 32 | 32 | 32 | 32 | 32 | 32 |
| ®Thermolin RF 230 [Gew.-Teile] | 15 | — | 20 | — | 40 | — |

Tabelle 2 (Fortsetzung)

| Ausgangskomponenten | Vergleichsbeispiele B | C | D | E | F | G |
|---|---|---|---|---|---|---|
| ®Ixol B 251 [Gew.-Teile] | — | 15 | — | 20 | — | 40 |
| $Sb_2O_3$ [Gew.-Teile] | 5 | 5 | — | — | — | — |
| Hal/P [Gew.-%] | 2,15/0 | 1,9/0,05 | 2,9/0 | 2,56/0,07 | 5,8/0 | 5,07/0,14 |
| B 2 nach DIN 4102 | + | + | — | — | + | + |
| Druckfestigkeit nach DIN 43421 [N/mm²] | 0,17 | 0,23 | — | — | 0,17 | 0,25 |
| Raumgewicht [g/l] | 39 | 39 | 39 | 39 | 39 | 39 |

Tabelle 2 (Fortsetzung)

| Ausgangskomponenten | Beispiele 10 | 11 | 12 | 13 | 14 |
|---|---|---|---|---|---|
| Roh-MDI [Gew.-Teile] | 248,4 | 248,4 | 248,4 | 248,4 | 248,4 |
| Polyol A [Gew.-Teile] | 80 | 80 | 80 | 80 | 80 |
| DC 193 [Gew.-Teile] | 2 | 2 | 2 | 2 | 2 |
| TEA [Gew.-Teile] | 0,6 | 0,6 | 0,6 | 0,6 | 0,6 |
| Kat [Gew.-Teile] | 1,6 | 1,6 | 1,6 | 1,6 | 1,6 |
| ®Dabco TMR 2 [Gew.-Teile] | 0,5 | 0,5 | 0,5 | 0,5 | 0,5 |
| R 11 [Gew.-Teile] | 52 | 52 | 52 | 52 | 52 |
| ®Ixol B 251 [Gew.-Teile] | 20 | 20 | 20 | 20 | 20 |
| $Al(H_2PO_2)_3$ [Gew.-Teile] | 5 | — | — | — | — |
| $Ca(H_2PO_2)_2$ [Gew.-Teile] | — | 10 | — | — | — |
| $Sn(H_2PO_2)_2$ [Gew.-Teile] | — | — | 10 | — | — |
| $Ce(H_2PO_2)_3$ [Gew.-Teile] | — | — | — | 5 | — |
| Melaminhypophosphit [Gew.-Teile] | — | — | — | — | 5 |
| Hal/P [Gew.-%] | 1,6/0,5 | 1,85/0,92 | 1,8/0,64 | 1,87/0,33 | 1,88/0,25 |
| B 2 nach DIN 4102 | + | + | + | + | + |
| Druckfestigkeit nach DIN 43421 [N/mm²] | 0,18 | 0,24 | 0,19 | 0,19 | 0,21 |
| Raumgewicht [g/l] | 32 | 36,5 | 32 | 35 | 34 |

Tabelle 2 (Fortsetzung)

| Ausgangskomponenten | Beispiele 15 | 16 | 17 | 18 | 19 |
|---|---|---|---|---|---|
| Roh-MDI [Gew.-Teile] | 262,5 | 262,5 | 259,3 | 262,5 | 247,8 |
| Polyol A [Gew.-Teile] | 80 | 80 | 80 | 80 | 80 |
| DC 193 [Gew.-Teile] | 2 | 2 | 2 | 2 | 2 |
| TEA [Gew.-Teile] | 0,6 | 0,6 | 0,1 | 0,6 | 0,6 |
| Kat [Gew.-Teile] | 1,6 | 1,6 | 1,3 | 1,6 | 1,6 |
| ®Dabco TMR 2 [Gew.-Teile] | 0,5 | 0,5 | 0,3 | 0,5 | 0,5 |
| R 11 [Gew.-Teile] | 52 | 55 | 57 | 55 | 52 |
| ®Thermolin RF 230 [Gew.-Teile] | 20 | 20 | 20 | 20 | 20 |
| G 70—600 [Gew.-Teile] | 4 | 4 | 4 | 4 | — |
| $Al(H_2PO_2)_3$ [Gew.-Teile] | 10 | — | — | — | — |
| $Ca(H_2PO_2)_2$ [Gew.-Teile] | — | 10 | — | — | — |
| $Sn(H_2PO_2)_2$ [Gew.-Teile] | — | — | 10 | — | — |
| $Ce(H_2PO_2)_3$ [Gew.-Teile] | — | — | — | 10 | — |
| Melaminhypophosphit [Gew.-Teile] | — | — | — | — | 5 |
| Hal/P [Gew.-%] | 2,11/1 | 2/0,83 | 2,0/0,57 | 2,0/0,66 | 2,13/0,2 |
| B 2 nach DIN 4102 | + | + | + | + | + |
| Druckfestigkeit nach DIN 43421 [$N/mm^2$] | 0,2 | 0,2 | 0,26 | 0,16 | 0,15 |
| Raumgewicht [g/l] | 33 | 34 | 36 | 33 | 32 |

Tabelle 2 (Fortsetzung)

| Ausgangskomponenten | Vergleichsbeispiele H | J | K | L | M | N |
|---|---|---|---|---|---|---|
| Roh-MDI [Gew.-Teile] | 248,4 | 262,5 | 248,4 | 262,5 | 241,8 | 255 |
| Polyol A [Gew.-Teile] | 80 | 80 | 80 | 80 | 60 | 60 |
| DC 193 [Gew.-Teile] | 2 | 2 | 2 | 2 | 2 | 2 |
| TEA [Gew.-Teile] | 0,6 | 0,6 | 0,6 | 0,6 | 0,6 | 0,6 |
| Kat [Gew.-Teile] | 1,6 | 1,6 | 1,6 | 1,6 | 1,6 | 1,6 |
| ®Dabco TMR 2 [Gew.-Teile] | 0,5 | 0,5 | 0,5 | 0,5 | 0,5 | 0,5 |

Tabelle 2 (Fortsetzung)

| Ausgangskomponenten | Vergleichsbeispiele H | J | K | L | M | N |
|---|---|---|---|---|---|---|
| R 11 [Gew.-Teile] | 52 | 55 | 52 | 55 | 51 | 54 |
| ®Ixol B 251 [Gew.-Teile] | 20 | — | 20 | — | 40 | — |
| Thermolin RF 230 [Gew.-Teile] | — | 20 | — | 20 | — | 40 |
| G 70—600 [Gew.-Teile] | — | 4 | — | 4 | — | 4 |
| $Sb_2O_3$ [Gew.-Teile] | 5 | 5 | — | — | — | — |
| PCF [Gew.-Teile] | — | — | 10 | 10 | — | — |
| Hal/P [Gew.-%] | 1,87/0,5 | 2,02/0 | 3/0,23 | 3,1/0,17 | 3,87/0,1 | 4,18/0 |
| B 2 nach DIN 4102 | — | + | + | + | + | + |
| Druckfestigkeit nach DIN 43421 [N/mm²] | 0,21 | 0,16 | 0,22 | 0,21 | 0,23 | 0,21 |
| Raumgewicht [g/l] | 34 | 32 | 34 | 35 | 33 | 33 |

**Patentansprüche**

1. Verfahren zur Herstellung von flammwidrigen, Polyurethan- und/oder Polyisocyanuratgruppen enthaltenden Schaumstoffen durch Umsetzung von organischen Polyisocyanaten mit Polyolen in Gegenwart von Flammschutzmitteln, Katalysatoren und Treibmitteln sowie gegebenenfalls Kettenverlängerungsmitteln, Vernetzern, Hilfsmitteln und Zusatzstoffen, dadurch gekennzeichnet, daß man als Flammschutzmittel synergistisch wirkende Systeme aus

a) organischen Halogen oder Halogen und Phosphor enthaltenden Verbindungen und
b) anorganischen und/oder organischen Hypophosphiten verwendet.

2. Verfahren nach Anspruch 1, dadurch gekennzeichnet, daß die Halogen oder Halogen und Phosphor enthaltende Verbindungen zusätzlich mit NCO-Gruppen reaktive Wasserstoffatome gebunden enthalten.

3. Verfahren nach Anspruch 1 und 2, dadurch gekennzeichnet, daß man die Halogen oder Halogen und Phosphor enthaltende Verbindungen in Mengen von 5 bis 50 Gew.-Teilen pro 100 Gew.-Teilen Polyisocyanat verwendet.

4. Verfahren nach Anspruch 1, dadurch gekennzeichnet, daß man als anorganische Hypophosphite $NaH_2PO_2$, $Mg(H_2PO_2)_2$, $Ca(H_2PO_2)_2$, $Sn(H_2PO_2)_2$ und vorzugsweise $Al(H_2PO_2)_3$ verwendet.

5. Verfahren nach Anspruch 1, dadurch gekennzeichnet, daß man als organisches Hypophosphit Melaminhypophosphit verwendet.

6. Verfahren nach Anspruch 1, dadurch gekennzeichnet, daß man die anorganischen und/oder organischen Hypophosphite in Mengen von 0,1 bis 5 Gew.-%, bezogen auf das Gewicht von Polyisocyanaten und Polyolen, verwendet.

**Claims**

1. A process for the production of flame-retardant foams containing polyurethane and/or polyisocyanurate groups, by reacting organic polyisocyanate with polyols in the pressence of flame retardants, catalysts and blowing agents and, if desired, chain extenders, crosslinking agents, auxiliaries and additives, wherein a synergistic system consisting of

(a) organic compounds containing halogen or halogen and phosphorus, and
(b) inorganic and/or organic hypophosphites is used as flame retardant.

2. A process as claimed in claim 1, wherein the compounds containing halogen or halogen and phosphorus additionally contain bonded hydrogen atoms which react with NCO groups.

3. A process as claimed in claims 1 and 2, wherein the compounds containing halogen or halogen and phosphorus are used in amounts of from 5 to 50 parts by weight per 100 parts by weight of polyisocyanate.

4. A process as claimed in claim 1, wherein $NaH_2PO_2$, $Mg(H_2PO_2)_2$, $Ca(H_2PO_2)_2$, $Sn(H_2PO_2)_2$ and preferably $Al(H_2PO_2)_3$ are used as inorganic hypophosphites.

5. A process as claimed in claim 1, wherein melamine hypophosphite is used as organic hypophosphite.

6. A process as claimed in claim 1, wherein the inorganic and/or organic hypophosphites are used in amounts of from 0.1 to 5% by weight, based on the weight of polyisocyanates and polyols.

**Revendications**

1. Procédé de préparation de matières alvéolaires ininflammables, contenant des groupes polyuréthane et/ou polyisocyanurate, par réaction de polyisocyanates organiques avec des polyols, en présence de retardateurs de combustion, de catalyseurs et de gonflante ainsi éventuellement que d'allongeurs de chaîne, réticulants, auxiliaires et additifs, caractérisé par le fait que l'on utilise, comme retardateurs de combustion, des systèmes à action synergétique constitués de

a) composés organiques contenant un halogène ou halogène et phosphore, et
b) hypophosphites inorganiques et/ou organiques.

2. Procédé selon la revendication 1, caractérisé par le fait que les composés, contenant un halogène ou halogène et phosphore, contiennent, en outre, liés, des atomes d'hydrogène réactifs avec les groupes NCO.

3. Procédé selon la revendication 1 ou 2, caractérisé par le fait que l'on utilise les composés contenant halogène ou halogène et phosphore en proportion de 5 à 50 parties en poids pour 100 parties en poids de polyisocyanate.

4. Procédé selon la revendication 1, caractérisé par le fait que l'on utilise, comme hypophosphites inorganiques, $NaH_2PO_2$, $Mg(H_2PO_2)_2$, $Ca(H_2PO_2)_2$, $Sn(H_2PO_2)_2$ et de préférence $Al(H_2PO_2)_3$.

5. Procédé selon la revendication 1, caractérisé par le fait que l'on utilise, comme hypophosphite organique, de l'hypophosphite de mélamine.

6. Procédé selon la revendication 1, caractérisé par le fait que l'on utilise les hypophosphites inorganiques et/ou organiques en proportion de 0,1 à 5% en poids, par rapport au poids des polyisocyanates et polyols.